# EUROPEAN PATENT APPLICATION

(11) **EP 2 103 456 A1**
(43) Date of publication of application: **23.09.2009**
(21) Application number: 09155455.0
(22) Date of filing: 18.03.2009
(51) Int. Cl.: B60C 25/13, B60C 25/138

(54) **Bead pressing device of tire mounting/dismounting apparatus**

(30) Priority: 19.03.2008 JP 2008072541
(71) Applicant: Onodani Machine Co., Ltd., Echizen-city Fukui (JP)
(72) Inventor: Mimura, Yoshio, Echizen-city Fukui (JP)
(74) Representative: Suckling, Andrew Michael

(57) **Abstract**

A bead pressing device of a tire mounting/dismounting apparatus is provided which separates a tire bead from a wheel rim without causing damage to the tire and enhances the efficiency of the work of exchanging the tire. A bead roller (21) and a roller moving section (22) are disposed on one end of a bead pressing arm (20) that is displaced in a direction close to a rotational axis (L1) of a turntable (4) and in a direction away from the rotational axis (L1) and which is displaced in an upward direction and in a downward direction. While the bead pressing arm (20) is moved down, the bead roller (21) presses a tire bead (26) and the roller moving section (22) displaces the bead roller (21) in a direction close to a wheel rim (3) to press the tire bead (26) to the wheel drop, thereby separating the tire bead (26) from the wheel rim (3).

## Description

### BACKGROUND OF THE INVENTION

### 1. Field of the Invention

The present invention relates to a tire bead guide device of a tire mounting/dismounting apparatus that dismounts or mounts a tire having high rigidity such as a low-profile tire from or on a wheel, that is, is used for exchanging a tire.

### 2. Description of the Related Art

A tire mounting/dismounting apparatus called a tire changer or a tire exchanger has been used in order to exchange the tire of an automobile. The related art of this apparatus is described, for example, in Japanese Unexamined Patent Publication JP-A 2001-88518. In this related art, in order to solve a problem that the operation of dismounting and mounting a tire having high rigidity such as a low-profile tire from or on a wheel cannot be easily performed by one worker, a tire mounting/dismounting apparatus is constructed in the following manner: that is, a turntable on which a wheel is to be placed is disposed on a base so as to be rotatable around an shaft supported by the base; a wheel chucking device is disposed on the turntable; an insertion member body is disposed above the peripheral portion of the turntable; a mast erected on the side portion of the turntable has a pressing arm disposed thereon in such a way that the pressing arm can be angularly displaced and can move up and down; and the pressing arm has a press roller disposed thereon in such a way that the press roller can be changed to either a free state where the press roller can be rotated or a lock state where the press roller cannot be rotated.

When the tire is dismounted from the wheel rim, the pressing arm is moved down and the turntable is brought into a rotating state and the bead of the upper tire and side wall are pressed down by a bead pressing roller and the tire bead is dropped into the center drop of the wheel while rotating the turntable. At this time, the bead pressing roller is in a free state where the press roller can rotate and rotates with the rotation of the tire and wheel. When the tire and wheel rotate one revolution, the entire periphery of the upper bead is dropped into the center drop of the wheel.

Then, the protrusion of a mounting head is inserted between the wheel rim and the upper bead. At this time, the upper bead near the insertion point where the protrusion is inserted is pressed down by a bead pressing roller to make the protrusion be easily inserted. Moreover, the upper bead and the side wall, which are opposite in a peripheral direction 180 degree to the insertion point of the protrusion of the mounting head, are pressed down by the bead pressing roller, and the tip portion of a tire lever is inserted by a worker between the wheel rim and the upper bead, which are near the mounting head, to bring the upper bead into a state where the upper bead is angularly displaced to be raised to an upper position than the wheel rim. When the turntable is rotated in this state, the upper bead can be pulled out upward from the wheel rim.

Next, when the peripheral portion of a lifting disk is inserted between the lower bead of the tire and the wheel rim and the turntable is rotated while moved up, the tire is pressed upward and the tire is dismounted from the wheel.

As described above, in the related art, the tire exchanger is constituted such that the tire can be dismounted from the wheel by one worker.

Moreover, when the tire is mounted on the wheel, the lower bead of the tire is fitted in the wheel from the upper rim of the wheel, and the mounting head is set at a position where the upper bead of the tire can be easily mounted on the wheel, and the bead pressing roller is bought into a lock state, and a swing arm is positioned in such a way that the center of rotation of the swing arm is arranged on the rotational axis of the turntable. After the positioning, the swing arm has turn locked, and the bead pressing roller is moved down along with the swing arm, and the tire is pressed at a position near the more downstream side in the rotational direction than the mounting head on the side wall of the tire to bring the bead pressing roller into a lock state so as to prevent the bead pressing roller from rotating by itself. When the turntable is rotated in this state, the bead pressing roller rotates along with the rotation of the turntable as the bead pressing roller presses the side wall of the tire, whereby the upper bead of the tire can be fitted inside the upper rim of the wheel by the mounting head and the bead pressing roller.

In this manner, in the related art, the tire mounting/dismounting apparatus is constructed such that when the tire is mounted on the wheel, the bead pressing roller has its rotation locked and is held pressed against the side wall of the tire following the rotation of the tire to thereby prevent the upper bead from being returning upward from the upper rim of the wheel by the resilient recovering force of the tire. With this, even in the case of a tire having high rigidity such as a low-profile tire, the tire can be mounted on the wheel by one worker.

In the related art, the tire mounted on or dismounted from the wheel is a tire having high rigidity such as a low-profile tire. However, in the case of a recently employed tire that is reinforced by a metal wire or a carbon fiber, when the tire is dismounted from the wheel, even if the tire bead is pressed by a mounting press roller and hence is brought into a state where the tire bead is pressed down, the protruding portion of the mounting head is interposed between the rim of the wheel and the tire bead and the tire lever is inserted between the tire bead and the wheel rim by the manual operation to separate the tire bead upward from the wheel rim. Thus, the tire bead receives a large force from the protruding portion of the mounting head and the tire lever and hence suffers damage. When the tire bead is damaged in this manner, there is presented the problem that when the tire is mounted on the wheel, the degree of close contact between the wheel rim and the tire bead is reduced to make it difficult to keep appropriate air pressure for a long time.

### SUMAMRY OF THE INVENTION

An object of the invention is to provide a bead pressing device of a tire mounting/dismounting apparatus capable of preventing a tire bead from being damaged and dismounting from and mounting on the wheel the tire with ease and with high speed even in the case of a tire having high rigidity.

The invention provides a bead pressing device of a tire mounting/dismounting apparatus comprising:
a turntable for placing a wheel thereon, holding a wheel rim of the wheel so that the wheel rim can be removed from the turntable, and rotating the wheel rim around a vertical rotational axis;
a bead pressing arm disposed so as to be displaceable above the turntable in an upward direction away from the turntable and in a downward direction close to the turntable and so as to be displaceable above the turntable in a forward direction close to the rotational axis of the turntable and in a backward direction away from the rotational axis along a horizontal axis perpendicular to the rotational axis;
a bead roller held by one end arranged closer to the rotational axis in a longitudinal direction of the bead pressing arm, and disposed so as to be rotatable in a state of pressing down a tire bead of a tire placed on the turntable; and
a roller moving section disposed on one end in the longitudinal direction of the bead pressing arm, for moving the bead roller in the direction close to the rotational axis and in the direction away from the rotational axis.

According to the invention, the tire is mounted on the wheel placed on the turntable, and the wheel rim of the wheel is held so that the wheel rim of the wheel can be removed from the turntable, and the wheel is rotated around the substantially vertical rotational axis. The bead pressing arm is displaceable above the turntable in the upward direction away from the turntable and in the downward direction close to the turntable and is displaceable above the turntable in the forward direction close to the rotational axis of the turntable and in the backward direction away from the rotational axis along the horizontal axis perpendicular to the rotational axis.

The bead pressing arm has a bead pressing roller and a roller moving section which are disposed on its one end in the longitudinal direction, the roller moving section moving the bead roller in the direction close to the rotational axis and in the direction away from the rotational axis.

The bead roller can rotate in a state where it presses down the tire bead of the tire placed on the turntable along with the wheel, so that when the tire mounted on the wheel is rotated around the rotational axis on the turntable, the bead roller is also rotated with the rotation of the tire. When the bead pressing arm is moved down in this state, the tire bead rotates in the circumferential direction while being pressed down by the bead roller. Thus, even in the case of a tire having high rigidity, the tire bead can be pressed with a large force and hence can be separated from the wheel rim.

Moreover, the bead pressing arm can be displaced in the direction close to the rotational axis and in the direction away from the rotational axis. Thus, the bead pressing arm can be moved in the direction close to the rotational axis or in the direction away from the rotational axis so that the bead roller is arranged at a portion of the tire bead where the tire bead is pressed by the bead roller, for example, directly above a position near the wheel rim of the tire bead. With this, the bead roller can be positioned at a pressing position with precision.

The roller moving section is disposed on one end in the longitudinal direction of the bead pressing arm. This roller moving section can be moved in the direction close to the rotational axis and in the direction away from the rotational axis. Thus, when the bead pressing arm is moved down in a state where the bead roller is arranged directly above the pressing position of the tire bead by the bead pressing arm, the bead roller reaches the tire bead and starts to press down the tire bead. At this time, when the bead roller is moved in the direction close to the rotational axis by the roller moving section, a portion arranged closest to the rotational axis of the bead roller is arranged at a position closer to the wheel rim. With this, the bead roller can press down the tire bead deeply at the pressing position and hence can separate the tire bead, which is in close contact with the wheel rim on the more upstream side in the rotational direction than this pressing position, from the wheel rim with reliability.

Moreover, in the invention, it is preferable that the bead roller has an outer peripheral surface formed in a shape of a truncated cone in which a bottom surface faces the rotational axis of the turntable, and the bead roller is disposed so as to be rotatable around a roller axis which, as it extends downward, is inclined in a direction away from the rotational axis on a vertical imaginary plane including an axis of the bead pressing arm and the rotation axis of the turntable.

According to the invention, the bead roller has its outer peripheral surface formed in the shape of the truncated cone in which the bottom surface faces the rotational axis of the turntable. Moreover, this bead roller has its axis which, as it extends downward, is inclined in a direction away from the rotational axis on a vertical imaginary plane including the axis of the bead pressing arm and the rotation axis of the turntable and is disposed so as to be rotatable around this roller axis.

In this manner, the bead roller formed in the shape of the truncated cone is disposed with its axis inclined, so that the outer peripheral surface of the bead roller can be put into contact with the tire bead in a large area, and the bead roller does not apply a large sliding frictional force to the tire bead in a direction different from a tangent direction at the pressing position where the bead roller presses the tire bead. With this, even if the bead roller presses the tire bead with a large force, the bead roller does not apply a large force locally to the tire bead and a sliding frictional force produced when the bead roller slides on the tire bead in a direction different from the tangent direction becomes small. Thus, the tire bead can be prevented from suffering damage from the bead roller.

Moreover, the outer surface of the bead roller is formed in the shape of the truncated cone. Thus, even if the bead roller is moved by the roller moving section in the direction close to the rotational axis of the turntable at a position close to the wheel rim, the bead roller can be prevented from interfering with the wheel rim. Hence, the bead roller can press the tire bead down near to the wheel drop to separate the tire bead from the wheel rim with more reliability.

According to the invention, when the bead pressing arm is moved in the direction close to the rotational axis of the turntable and in the direction away from the rotational axis and the bead roller is positioned at the pressing position with precision and the bead pressing arm is moved down, the tire bead is pressed by the bead roller.

Further, according to the invention, the bead roller having its outer peripheral surface formed in the shape of the truncated cone is disposed so as to be rotatable around the roller axis which, as it extends downward, is inclined in the direction away from the rotational axis on the imaginary plane including the axis of the bead pressing arm and the rotational axis of the turntable. Thus, the bead roller can be put into contact with the tire bead in a large area, which makes it possible to prevent the bead roller from applying a large sliding frictional force to the tire bead at the pressing position. Hence, this can prevent the tire bead from suffering damage. Moreover, the outer peripheral surface of the bead roller is formed in the shape of the truncated cone, so that even if the bead roller is moved by the roller moving section in the direction close to the rotational axis of the turntable at a position close to the wheel rim, the bead roller can be prevented from interfering with the wheel rim. Hence, the bead roller can press the tire bead down near to the wheel drop to separate the tire bead from the wheel rim with more reliability.

### BRIEF DESCRIPTION OF THE DRAWINGS

Other and further objects, features, and advantages of the invention will be more explicit from the following detailed description taken with reference to the drawings wherein:
Fig. 1 is a plan view showing a tire mounting/dismounting apparatus according to one embodiment of the invention;
Fig. 2 is a right side view, when viewed from a right side in Fig. 1, of the tire mounting/dismounting apparatus;
Fig. 3 is a left side view, when viewed from a left side in Fig. 1, of the tire mounting/dismounting apparatus;
Fig. 4 is a bottom view, when viewed from a bottom side in Fig. 1, of the tire mounting/dismounting apparatus;
Fig. 5 is a side view of a tire bead guide device;
Fig. 6 is a plan view of the tire bead guide device;
Fig. 7 is a front view, when viewed from a left side, of the tire bead guide device;
Figs. 8A and 8B are side views showing an action of an insertion member by an insertion member drive section;
Figs. 9A to 9C are sectional views showing a procedure of separating a tire bead from a wheel rim by an insertion part;
Figs. 10A and 10B are sectional views simplified so as to show an action of a bead pressing device, Fig. 10A showing a state in which a bead roller is arranged directly above the tire bead, and Fig. 10B showing a state in which the tire bead is pressed down by the bead roller;
Fig. 11 is a side view of a mounting press device;
Fig. 12 is a plan view of the mounting press device; and
Figs. 13A and 13B are views showing the operation of moving up and down a second pressing member by a second moving up-and-down section, Fig. 13A showing a state in which the second pressing member is arranged at an upper position, and Fig. 13B showing a state in which the second pressing member is arranged at a lower position.

### DETAILED DESCRIPTION

Now referring to the drawings, preferred embodiments of the invention are described below.

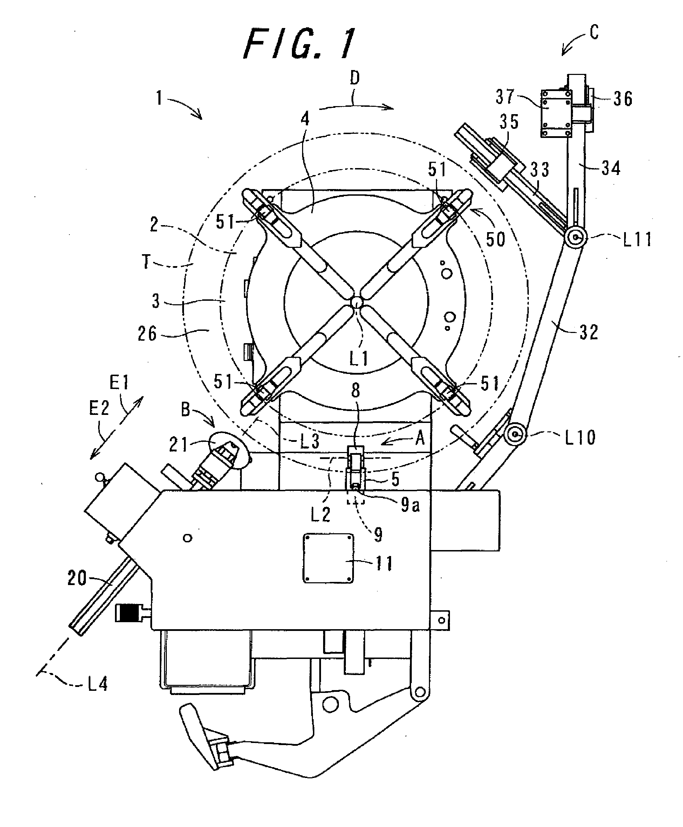

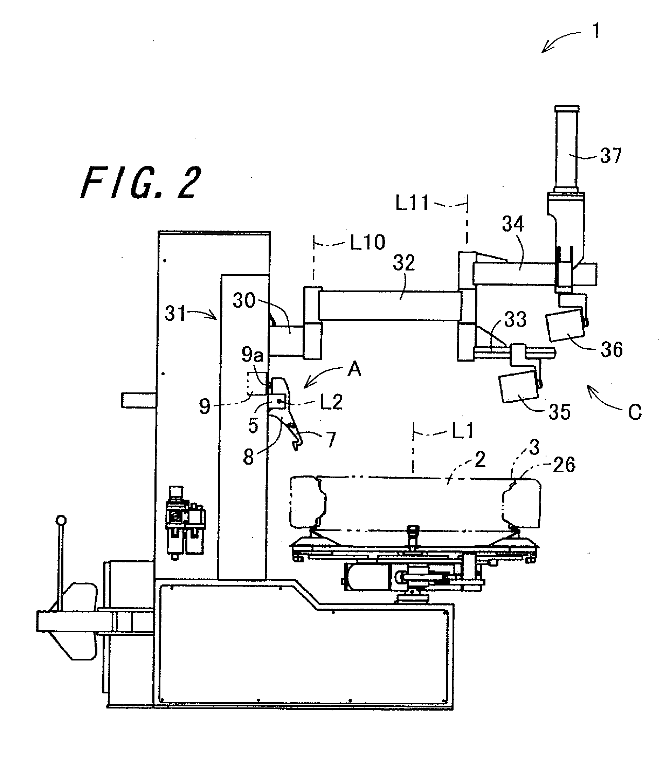

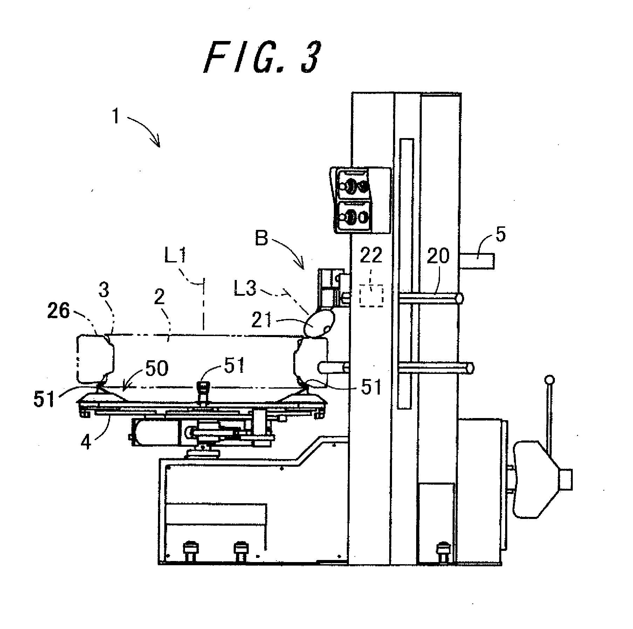

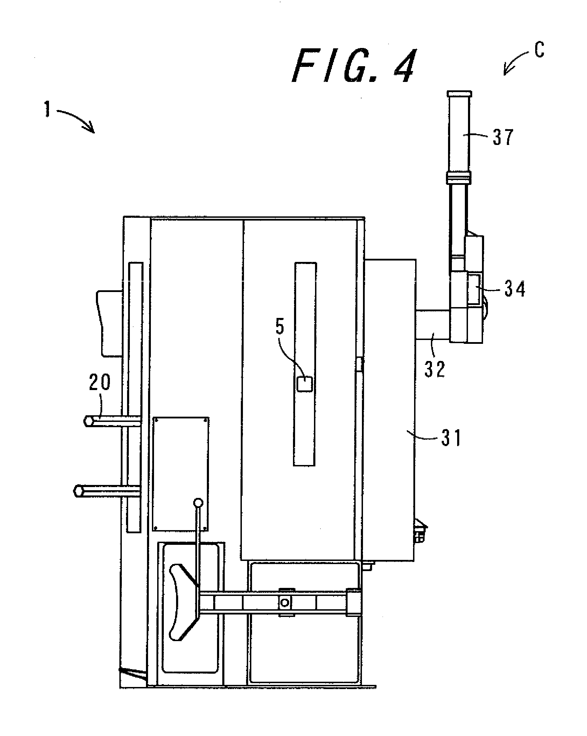

Fig. 1 is a plan view showing a tire mounting/dismounting apparatus 1 according to one embodiment of the invention. Fig. 2 is a right side view, when viewed from a right side in Fig. 1, of the tire mounting/dismounting apparatus 1. Fig. 3 is a left side view, when viewed from a left side in Fig. 1, of the tire mounting/dismounting apparatus 1. Fig. 4 is a bottom view, when viewed from a bottom side in Fig. 1, of the tire mounting/dismounting apparatus 1. The tire mounting/dismounting apparatus 1 of this embodiment includes a tire bead guide device A, a bead pressing device B, and a mounting press device C.

First, the construction of the tire bead guide device A will be described. The tire bead guide device A includes a turntable 4, an expandable arm 5 and an insertion member 8. The turntable 4 places a wheel 2 thereon, holds a wheel rim 3 of the wheel 2 so that the wheel rim of the wheel 2 can be removed from the turntable 4, and rotates the wheel rim 3 in a direction shown by an arrow D around a rotational axis L1. The expandable arm 5 is disposed so as to be displaceable above the turntable 4 in an upward direction away from the turntable 4 and in a downward direction close to the turntable 4 and so as to be displaceable above the turntable 4 in a forward direction close to the rotational axis L1 of the turntable 4 and in a backward direction away from the rotational axis L1 along a horizontal axis perpendicular to the rotational axis L1. The insertion member 8 has an insertion member body 6. The insertion member body 6 is disposed on one end arranged closer to the rotational axis L1 in a longitudinal direction of the expandable arm 5 so as to be angularly displaceable around an angular displacement axis L2 perpendicular to an imaginary plane including an axis of the expandable arm 5. The insertion member body 6 has an insertion part 7 disposed on one end arranged on the turntable 4 side with respect to the angular displacement axis L2 of the insertion member body 6, the insertion part 7 being inserted between the wheel rim 3 and the tire bead 26.

The turntable 4 has a chuck section 50 for removably holding the wheel 2 placed with the rotational axis L1. This chuck section 50 has four engaging claws 51 disposed axisymmetrically with respect to the rotational axis L1 and the respective engaging claws 51 are displaceably driven in directions close to and away from each other by a double-acting pneumatic cylinder (not shown). These engaging claws 51 can pinch a lower rim of the placed wheel 2 from the outside in a radial direction thereof and can hold the wheel 2 on the same axis as the rotational axis L1. Moreover, when the respective engaging claws 51 are displaced in the direction away from each other, the wheel 2 is released from a pinching state and hence can be removed from the turntable 4.

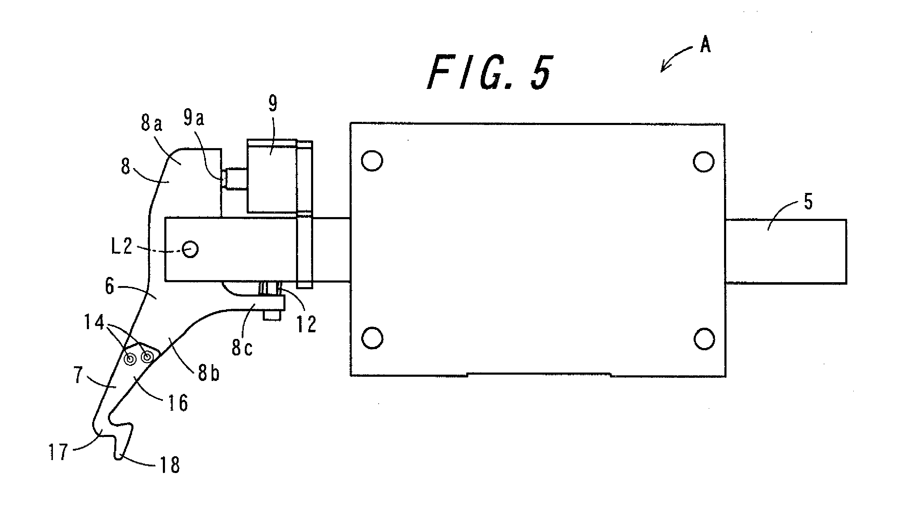

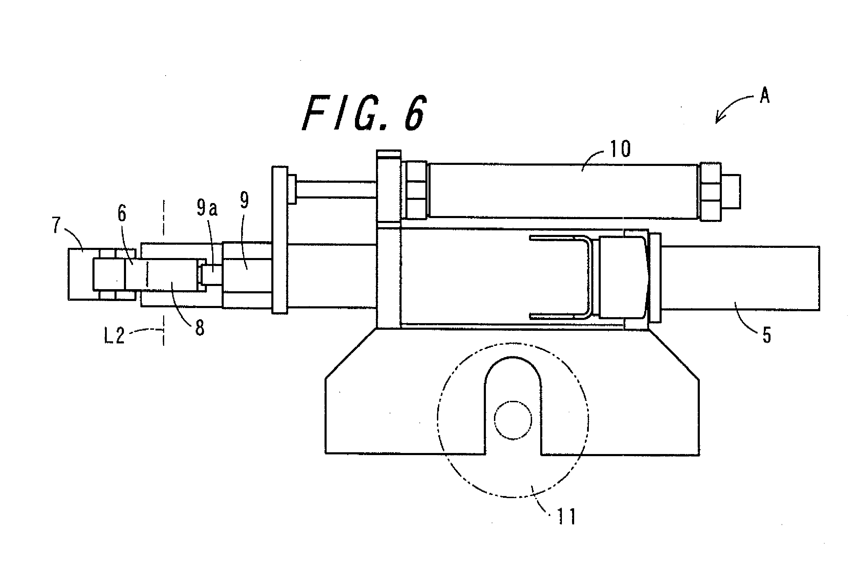

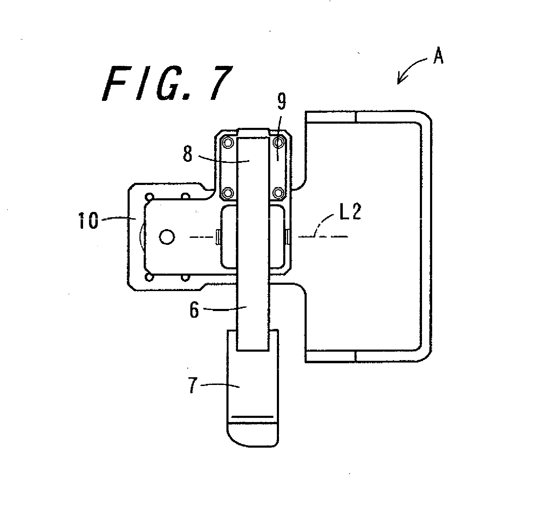

Fig. 5 is a side view of the tire bead guide device A. Fig. 6 is a plan view of the tire bead guide device A. Fig. 7 is a front view, when viewed from the left side, of the tire bead guide device A. The tire bead device A further includes an insertion member drive section 9, a spring biasing section 12, a forward/backward drive section 10, an upward/downward drive section 11, and a forward/backward displacement preventing section (not shown). The insertion member drive section 9 is disposed on one end in the longitudinal direction of the expandable arm 5, and has a plunger 9a that supports another end opposite to the one end of the insertion member body 6 with respect to the angular displacement axis L2 from the outside in the radial direction with respect to the rotational axis L1. The spring biasing section 12 biases the insertion member 8 with a spring in the direction in which one end of the insertion member body 6 is close to the rotational axis L1 of the turntable 4 and in which the other end of the insertion member body 6 is away from the rotational axis L1. The forward/backward drive section 10 displaceably drives the expandable arm 5 in the forward direction and in the backward direction. The upward/downward drive section 11 displaceably drives the expandable arm 5 in the upward direction and in the downward direction. The forward/backward displacement preventing section prevents the expandable arm 5 from being displaced in the forward direction and in the backward direction. The forward/backward displacement preventing section may be realized, for example, by keeping a state in which pressure chambers on both sides of the piston of the forward/backward drive section 10 are supplied with air of equal pressure.

The insertion member body 6 is made of steel or stainless steel and includes: a to-be-pressed portion 8a pressed by the plunger 9a; an attaching portion 8b connected to the to-be-pressed portion 8a in a bent form and extending toward an opposite side to the angular displacement axis L2 and having the insertion part 7 removably and exchangeably disposed thereon with plural bolts 14; and a spring receiving portion 8c protruding from the attaching portion 8b in a direction opposite to a direction in which the plunger 9a presses the to-be-pressed portion 8a (the left direction in Fig. 5).

The spring biasing section 12 is realized by a compression coil spring and is interposed between the spring receiving portion 8c and the expandable arm 5 and biases the insertion member body 6 in a direction in which its one end is close to the rotational axis L1 and in which its other end is away from the rotational axis L1.

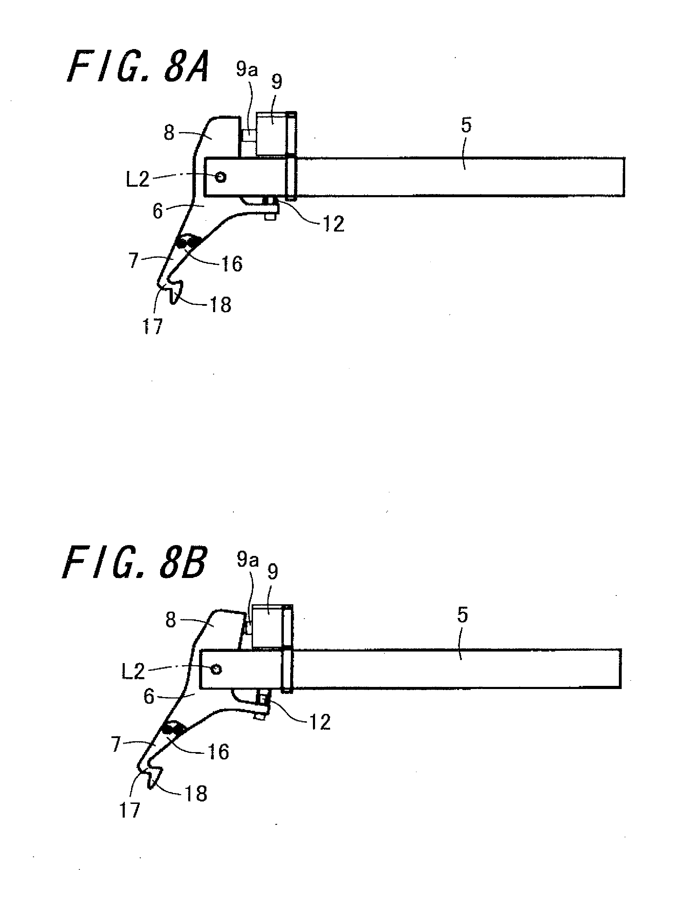

Figs. 8A and 8B are side views showing the action of the insertion member 8 by the insertion member drive section 9. Fig. 8A shows a state in which the plunger 9a is extended to move the insertion part 7 backward in the direction away from the rotational axis L1. Fig. 8B shows a state in which the plunger 9a is retracted to move the insertion part 7 forward in the direction close to the rotational axis L1. The insertion member drive section 9 is realized by a double-acting pneumatic cylinder and can extend/retract the plunger 9a to angularly displace the insertion member 8 around the angular displacement axis L2 in the direction in which its one end is away from the rotational axis L and in which its other end is close to the rotational axis L1.

The insertion part 7 includes: a base portion 16 formed in a shape tapered in a direction away from the insertion member body 6; a first portion 17 connected to the base portion 16 and extending in the direction away from the rotational axis L1; and a second portion 18 connected to the first portion 17 and extending in the direction away from the angular displacement axis L2. The insertion part 7 is made of synthetic resin.

The construction of the bead pressing device B will be described. Referring again to Figs. 1 to 3, the bead pressing device B includes a bead pressing arm 20, a bead roller 21 and a roller moving section 22. The bead pressing arm 20 is disposed so as to be displaceable above the turntable 4 in the upward direction away from the turntable 4 and in the downward direction close to the turntable 4 and so as to be displaceable above the turntable 4 in the forward direction E1 close to the rotational axis L1 of the turntable 4 and in the backward direction E2 away from the rotational axis L1 along a horizontal axis perpendicular to the rotational axis L1. The bead roller 21 is held by one end arranged closer to the rotational axis L1 in the longitudinal direction of the bead pressing arm 20 and is disposed so as to be rotatable in a state of pressing down the tire bead 26 of a tire T placed on the turntable 4. The roller moving section 22 is disposed on one end in the longitudinal direction of the bead pressing arm 20 and moves the bead roller 21 in the direction E1 close to the rotational axis L1 and in the direction E2 away from the rotational axis L1.

The bead roller 21 has an outer peripheral surface 21a shaped like a truncated cone and is disposed so as to be rotatable around a roller axis L3 with its bottom surface faced the rotational axis L1 which, as it extends downward, is inclined in a direction away from the rotational axis L1 on a vertical imaginary plane including an axis L4 of the bead pressing arm 20 and the rotational axis L1 of the turntable 4.

Next, the construction of the mounting press device C will be described. The mounting press device C includes a first moving up-and-down section 31, a swing arm 32, a first arm 33, a second arm 34, a first pressing member 35, a second pressing member 36 and a second moving up-and-down section 37. The first moving up-and-down section 31 is disposed adjacently to the turntable 4 and has a moving up-and-down body 30 that is moved up and down along a moving path parallel to the rotational axis L1 of the turntable 4. The swing arm 32 is coupled to the moving up-and-down body 30 of the first moving up-and-down section 31 so as to be rotatable around a swing axis L10 parallel to the rotational axis L1 of the turntable 4. The first arm 33 is coupled to the swing arm 32 so as to be rotatable around a first axis L11 parallel to the rotational axis L1 of the turntable 4. The second arm 34 is coupled to the swing arm 32 at a position higher than the first arm 33 so as to be rotatable around the first axis L11. The first pressing member 35 is disposed on the first arm 33 so as to be movable along the first arm 33. The second pressing member 36 is held by the second arm 34. The second moving up-and-down section 37 is disposed on the second arm 34 so as to be movable along the second arm 34 and moves up and down the second pressing member 36.

The first and second pressing members 35, 36 are realized by a roller that is shaped like a right circular column and which is rotatable around an axis crossing the rotational axis L1 of the turntable 4 on an imaginary plane including the rotational axis L1. Moreover, the first and second moving up-and-down sections 31, 37 are realized by a double-acting pneumatic cylinder. In the other embodiments of the invention, at least one of the first and second pressing members 35, 36 may be formed of a pressing member shaped like a plate and having a tire pressing plane that is substantially flat along the imaginary plane perpendicular to the rotational axis L1 of the turntable 4.

According to this embodiment, the wheel 2 is placed on the turntable 4, and the wheel rim 3 of the wheel 2 is held by the turntable 4 so that the wheel rim 3 of the wheel 3 can be removed from the turntable 4, and the wheel rim 3 is rotated around the substantially vertical rotational axis L1. Moreover, the expandable arm 5 is displaceable above the turntable 4 in the upward direction away from the turntable 4 and in the downward direction close to the turntable 4 and is displaceable above the turntable 4 in the forward direction close to the rotational axis L1 of the turntable 4 and in the backward direction away from the rotational axis L1 along the horizontal axis perpendicular to the rotational axis L1.

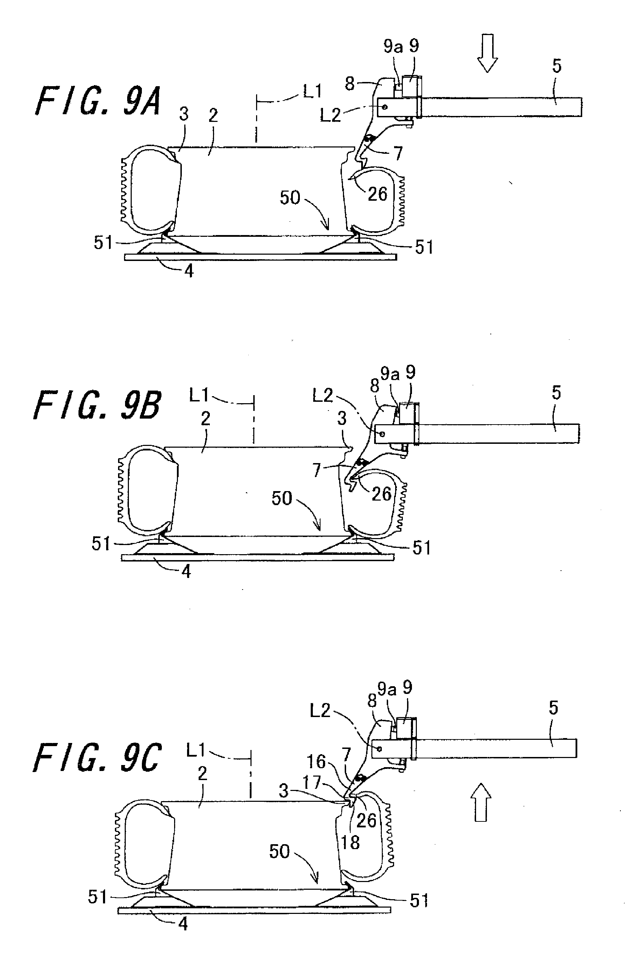

Figs. 9A to 9C are sectional views showing the procedure of separating the tire bead 26 from the wheel rim 3 by the insertion part 7. Fig. 9A shows a state in which the tire bead 26 is pressed down by the insertion part 7, and Fig. 9B shows a state in which the tire bead 26 is engaged with the insertion part 7, and Fig. 9C shows a state in which the tire bead 26 is separated above the wheel rim 3. When the tire is separated from the wheel 2 in a state in which the insertion part 7 is attached to the insertion member body 6, as shown in Fig. 9A, the expandable arm 5 is moved down and positioned while being adjusted in the forward direction and in the backward direction in such a way that the insertion part 7 reaches near the wheel rim 3 of the tire bead 26 of the tire placed on the turntable 4, and when the expandable arm 5 is further moved down from a state in which the insertion part 7 is in contact with the tire bead 26, the tire bead 26 is pressed down by the insertion part 7, thereby being separated from the wheel rim 3.

When the plunger 9a is retracted in this state, as shown in Fig. 9B, the insertion member body 6 is angularly displaced by the spring force of the spring biasing section 12 in the direction in which its other end is away from the rotational axis L1 and in which its one end is close to the rotational axis L1, and the insertion part 7 is displaced in the direction close to the wheel rim 3. As the expandable arm 5 is gradually further moved down, the insertion part 7 engages with the tire bead 26 at a position close to the center drop portion of the wheel rim 3. With this, even if the tire T is a tire having high rigidity that has a low profile and is reinforced by a metal wire, the insertion part 7 can be inserted between the tire bead 26 and the wheel rim 3 in a state where the insertion part 7 is sufficiently close to the wheel rim 3. Thus, the insertion part 7 can be smoothly inserted without pressing the tire bead 26 by a large pressing force by the insertion part 7, which can prevent the tire bead 26 from being damaged when the insertion part 7 is inserted.

In this manner, the insertion part 7 can be inserted between the tire bead 26 and the wheel rim 3 at a position as close to the outer peripheral surface of the wheel rim 3 as possible. Thus, the tire bead 26 is not pressed with a larger force than is necessary and is prevented from having a scratch defect or a scratch mark caused by the contact with the insertion part 7. Thus, the damage of the tire can be significantly reduced than ever before.

Moreover, when the tire bead 26 is separated from the wheel rim 3, the insertion member 8 does not apply large force to the tire bead 26. Thus, the insertion part 7 can be smoothly inserted between the tire bead 26 and the wheel rim 3, which can facilitate and speed up the operation of exchanging the tire.

Further, the insertion part 7, as shown in Fig. 9C, has the base portion 16, the first portion 17, and the second portion 18. The base portion 16 is formed in the shape tapered in the direction away from the insertion member body 6, so that when the insertion part 7 is inserted between the tire bead 26 and the wheel rim 3, the interference of the insertion part 7 with the surrounding members can be reduced and the inserted portion of the insertion part 7 can be visually checked with ease from the outside by the worker. The first portion 17 is connected to the base portion 16, and the second portion 18 is connected to the first portion 17. The first portion 17 extends in the direction away from the rotational axis L1 of the turntable 4, and the second portion 18 extends in the direction away from the angular displacement axis L2 of the insertion member body 6. Thus, the tip portion of the insertion part 7 is formed in a substantially S-shape in a cross section perpendicular to the angular displacement axis L2.

Since the insertion member 8 is provided with the insertion part 7, when the insertion part 7 is inserted between the tire bead 26 and the wheel rim 3, first, the second portion 18 is inserted between the tire bead 26 and the wheel rim 3, and then the first portion 17 is moved down near the wheel rim 3, and in this state, the expandable arm 5 is displaced and adjusted in the forward direction and in the backward direction in such a way that the base portion 16 is close to the wheel rim 3. Then, when the plunger 9a of the insertion member drive section 9 is retracted to incline the second portion 18 so as to face the tire bead 26 and the expandable arm 5 is moved down, the tire bead 26 climbs over the second portion 18 and engages with a stepped portion formed in a substantially L-shape by the first portion 17 and the base portion 16. When the expandable arm 5 is moved up in this state, even in the case of a tire having high rigidity, the tire bead 26 of the tire can be pulled up above the wheel rim 3 by one worker in a short time without using a tire lever as in the case of the related art and the tire can be separated from the wheel 2.

Further, the expandable arm 5 is displaceably driven in the forward direction and in the backward direction by the forward/backward drive section 10 and is displaceably driven in the upward direction and in the downward direction by the upward/downward drive section 11 and is prevented from being displaced in the forward direction and in the backward direction by the forward/backward displacement preventing section.

Since the expandable arm 5 is displaceably driven in the forward direction and in the backward direction and in the upward direction and in the downward direction by the forward/backward drive section 10, the expandable arm 5 can be displaced in the forward direction and in the backward direction in such a way that the insertion part 7 of the insertion member 8 is arranged in the vicinity directly above the position between the wheel rim 3 and the tire bead 26 above the turntable 4, whereby the insertion part 7 can be positioned.

Still further, since the expandable arm 5 is displaceably driven in the upward direction and in the downward direction by the upward/downward drive section 11, the expandable arm 5 can be moved up and down in such a way that the insertion part 7 is arranged between an upward position upper than the tire and the wheel 2 on the turntable 4 and a downward position where the insertion part 7 is inserted between the wheel rim 3 and the tire bead 26.

In this manner, since the expandable arm 5 can be displaced in the forward direction and in the backward direction by the forward/backward drive section 10 and can be displaced in the upward direction and in the downward direction by the upward/downward drive section 11, the worker does not need to move the insertion member 8 fixed to the expandable arm 5 directly by the manual operation, but the insertion member 8 can be moved from an insertion position between the wheel rim 3 and the tire bead 26 to an arbitrary position or from an arbitrary position to the insertion position. With this, the work load applied to the worker at the time of mounting and dismounting the tire can be reduced and the operation time required to perform the operation of mounting and dismounting the tire can be reduced.

By providing the forward/backward displacement preventing section, after arranging the expandable arm 5 at an arbitrary position in the forward direction and in the backward direction by the forward/backward drive section 10, the forward/backward displacement preventing section can prevent the expandable arm 5 from being displaced in the forward direction and in the backward direction. Thus, even when the expandable arm 5 is prevented from being displaced in the forward direction and in the backward direction in a state in which the insertion part 7 is inserted between the wheel rim 3 and the tire bead 26 and the plunger 9a of the insertion member drive section 9 is extended, the expandable arm 5 can be prevented from being displaced in the backward direction by a reactive force that the insertion member 8 receives from the tire bead 26. Hence, even in the case of the tire having high rigidity, the tire bead 26 can be surely separated from the wheel rim 3.

Further, since the insertion member 8 is biased with the spring by the spring biasing section 12, when the insertion part 7 is inserted between the tire bead 26 and the wheel rim 3 and then the expandable arm 5 is moved up to separate the tire bead 26 above the wheel rim 3, even if the expandable arm 5 is moved up in a state where the insertion part 7 is in contact with the wheel rim 3, the insertion member body 6 can be angularly displaced against the spring force of the spring biasing section 12 in the direction in which the one end of the insertion member body 6 is away from the rotational axis L1 of the turntable 4 and in which the other end thereof is close to the rotational axis L1 of the turntable 4. With this, it is possible to prevent the insertion part 7 from being put into contact with the wheel rim 3 with a large force to cause damage to the wheel rim 3.

Still further, since the insertion member 8 is biased by the spring of the spring biasing section 12, even if the expandable arm 5 is moved down or up in a state where the expandable arm 5 is extended at a position in which the insertion part 7 is always in contact with the wheel rim 3, as described above, the insertion part 7 can be close to or away from the rotational axis L1 of the turntable 4 along the wheel rim 3, and hence the speed with which the insertion part 7 is moved up and down can be increased.

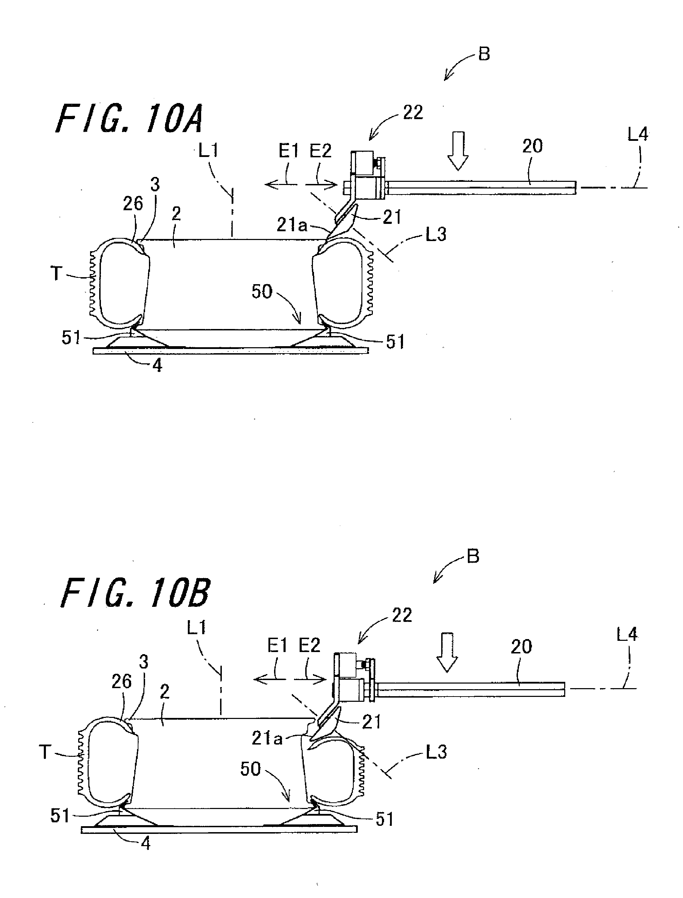

Figs. 10A and 10B are sectional views simplified so as to show the action of the bead pressing device B. Fig. 10A shows a state in which the bead roller 21 is arranged directly above the tire bead 26, and Fig. 10B shows a state in which the tire bead 26 is pressed down by the bead roller 21. The bead roller 21, as shown in Fig. 10A, is arranged close to the wheel rim 3 directly above the tire bead 26 of the tire T placed on the turntable 4 along with the wheel 2 and can be rotated around the roller axis L3 in a state where the bead roller 21 presses down the tire bead 26 at this pressing position. Thus, when the tire T mounted on the wheel 2 is rotated around the rotational axis L1 on the turntable 4, the bead roller 21 is also rotated around the roller axis L3 along with the rotation of the tire T. When the bead pressing arm 20 is moved down in this state, as shown in Fig. 10B, the tire bead 26 is rotated in the circumferential direction while being pressed down by the bead roller 21. Thus, even in the case of the tire T having high rigidity, the bead roller 21 can press the tire bead 26 with large force and can press in the tire bead 26 from the wheel rim 3 to an inner drop 6b, thereby being able to surely separate the tire bead 26 from the wheel rim 3.

Further, the bead pressing arm 20 can be displaced in the direction E1 close to the rotational axis L1 of the turntable 4 and in the direction E2 away from the rotational axis L1. Thus, the bead pressing arm 20 can be moved in the direction E1 close to the rotational axis L1 of the turntable 4 or in the direction E2 away from the rotational axis L1 in such a way that the bead roller 21 is arranged at a position where the tire bead 26 is pressed by the bead roller 21, for example, directly above a position near the wheel rim 3 of the tire bead 26. With this, the bead roller 21 can be positioned at a pressing position with precision.

Still further, the roller moving section 22 disposed on one end in the longitudinal direction of the bead pressing arm 20 can move the bead roller 21 in the direction E1 close to the rotational axis L1 and in the direction E2 away from the rotational axis L1. Thus, when the bead pressing arm 20 is moved down in a state in which the bead roller 21 is arranged directly above the pressing position of the tire bead 26 by the bead pressing arm 20, the bead roller 21 reaches to tire bead 26 as shown in Fig. 10A and starts to press down the tire bead 26. When the bead roller 21 is moved in the direction E1 close to the rotational axis L1 by the roller moving section 22 at this time, a portion 21a arranged closest to the rotational axis L1 of the bead roller 21 is arranged at a position closer to the wheel rim 3. With this, the bead roller 21 can press down the tire bead 26 deeply at the pressing position, thereby being able to surely separate the tire bead 26, which is in close contact with the wheel rim 3 on the more upstream side in the rotational direction D than this pressing position, from the wheel rim 3.

Still further, the bead roller 21 has its outer peripheral surface formed in the shape of a truncated cone in which its bottom surface faces the rotational axis L1 of the turntable 4. Moreover, this bead roller 21 has its axis L3 which, as it extends downward, is inclined in a direction away from the rotational axis L1 on an imaginary plane including the axis L4 of the bead pressing arm 20 and the rotational axis L1 of the turntable 4 and is disposed so as to be rotatable around this roller axis L4.

Since the bead roller 21 formed in the shape of the truncated cone is disposed so as to be inclined in this manner, the outer peripheral surface of the bead roller 21 can be put into contact with the large area of the tire bead 26 and the bead roller 21 does not apply a large sliding and frictional force to the tire bead 26 in a direction different from a tangent direction at the pressing position in which the bead roller 21 presses the tire bead 26. With this, even if the bead roller 21 presses the tire bead 26 with a large force, the bead roller 21 does not apply a large force locally to the tire bead 26 and the sliding and frictional force produced when the bead roller 21 slides on the tire bead 26 in a direction different from the tangent direction becomes small, which can prevent the tire bead 26 from being damaged by the bead roller 21.

Still further, since the outer peripheral surface of the bead roller 21 is formed in the shape of the truncated cone, even if the bead roller 21 is moved by the roller moving section 22 in the direction E1 close to the rotational axis L1 of the turntable 4 at a position close to the wheel rim 3, the bead roller 21 can be prevented from interfering with the wheel rim 3. Thus, it is possible to press down the tire bead 26 near to the wheel drop and hence to separate the tire bead 26 from the wheel rim 3 with more reliability.

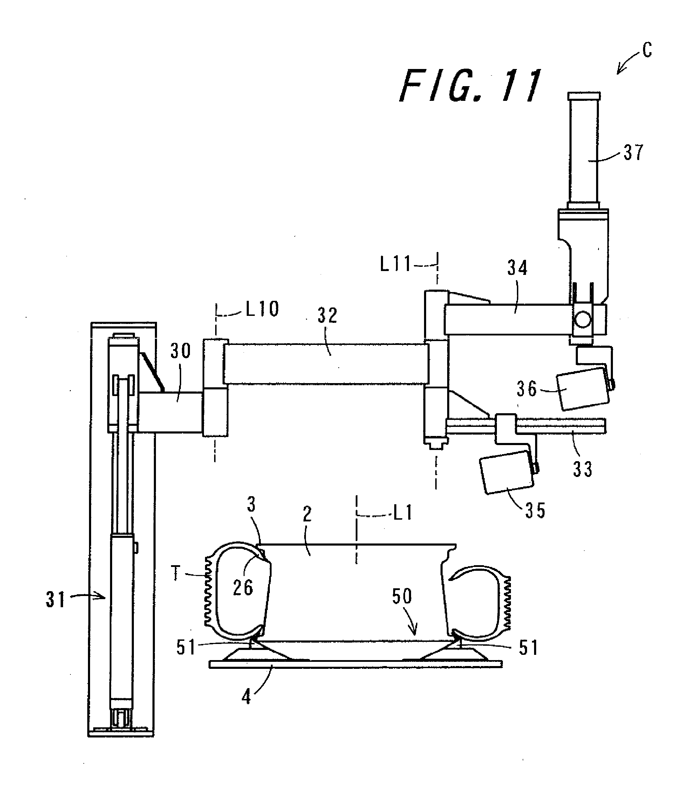

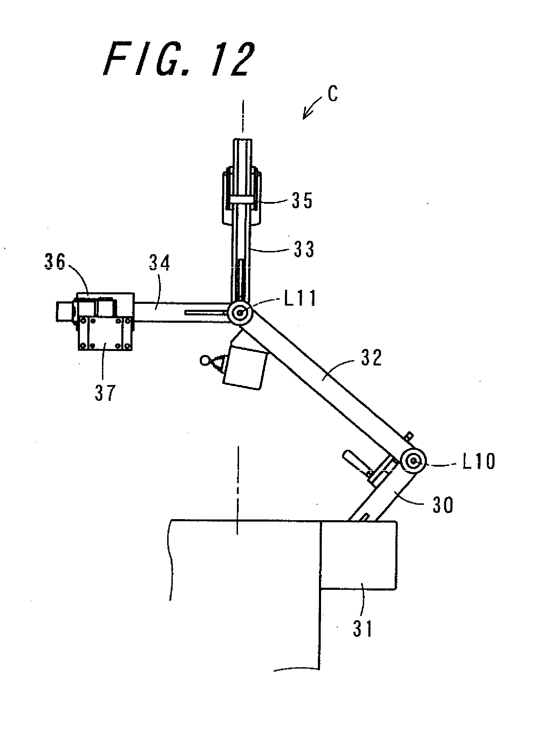

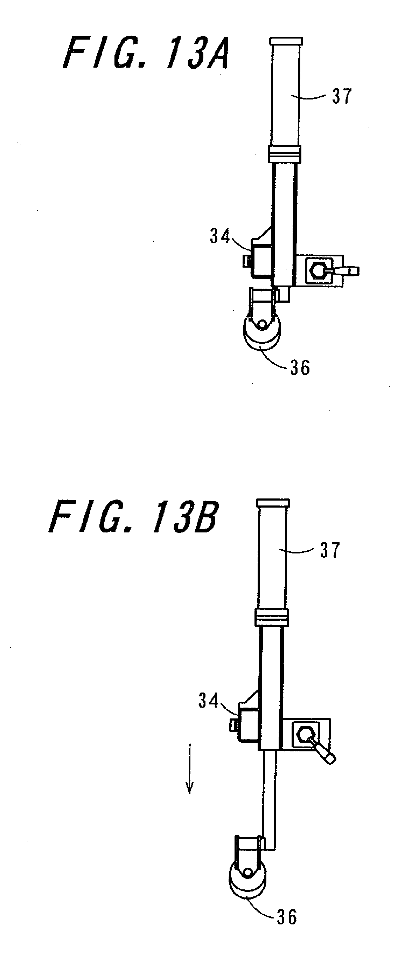

Fig. 11 is a side view of the mounting press device C. Fig. 12 is a plan view of the mounting press device C. Figs. 13A and 13B show the operation of moving up and down the second pressing member 36 by the second moving up-and-down section 37, and Fig. 13A shows a state in which the second pressing member 36 is arranged at an upper position and Fig. 13B shows a state in which the second pressing member 36 is arranged at a lower position. As described above, the mounting press device C has the first and second pressing members 35, 36, and the second pressing member 36 of at least one of the respective pressing members 35, 36 is moved up and down by the second moving up-and-down section 37 between the upper position higher than the tire T and wheel 2 placed on the turntable 4 as shown in Fig. 13A and the lower position to which the tire bead 26 placed on the turntable 4 is pressed down as shown in Fig. 13B.

In the case where the upper bead 26 of the tire T is mounted on the wheel rim 3, when the axis of the expandable arm 5 of the tire bead guide device A is assumed to be 0°, the second pressing member 36 is moved down from the upper position shown in Fig. 13A to the lower position shown in Fig. 13B at the position of 90° on the downstream side in the rotational direction D of the turntable 4 to press the tire bead 26 to the wheel drop.

Next, when the turntable 4 is rotated until the second arm 34 is moved to the position of 180° on the more downstream side in the rotational direction D than the expandable arm 5 of the tire bead guide device A, the tire bead 26 is not pressed down to the wheel drop at a position near the downstream side at the angle of 90° in the rotational direction D from the expandable arm 5 but is moved upward to the surface portion of the wheel rim 3. Then, the tire bead 26 near downstream side at the angle of 90° in the rotational direction D of the tire is further pressed by the use of the second pressing member 36 and the turntable 4 is intermittently rotated with the tire bead 26 held pressed. With this, even in the case of the tire T having high rigidity, the tire T can have the upper bead fitted in the wheel rim 3.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A bead pressing device (B) of a tire mounting/dismounting apparatus comprising:
a turntable (4) for placing a wheel (2) thereon, holding a wheel rim (3) of the wheel (2) so that the wheel rim (3) can be removed from the turntable (4), and rotating the wheel rim (3) around a vertical rotational axis (L1);
a bead pressing arm (20) disposed so as to be displaceable above the turntable (4) in an upward direction away from the turntable (4) and in a downward direction close to the turntable (4) and so as to be displaceable above the turntable (4) in a forward direction close to the rotational axis (L1) of the turntable (4) and in a backward direction away from the rotational axis (L1) along a horizontal axis perpendicular to the rotational axis (L1);
a bead roller (21) held by one end arranged closer to the rotational axis (L1) in a longitudinal direction of the bead pressing arm (20), and disposed so as to be rotatable in a state of pressing down a tire bead (26) of a tire (T) placed on the turntable (4); and
a roller moving section (22) disposed on one end in the longitudinal direction of the bead pressing arm (20), for moving the bead roller (21) in the direction close to the rotational axis (L1) and in the direction away from the rotational axis (L1).

2. The bead pressing device of claim 1, wherein the bead roller (21) has an outer peripheral surface (21a) formed in a shape of a truncated cone in which a bottom surface faces the rotational axis (L1) of the turntable (4), and the bead roller (21) is disposed so as to be rotatable around a roller axis (L3) which, as it extends downward, is inclined in a direction away from the rotational axis (L1) on a vertical imaginary plane including an axis (L4) of the bead pressing arm (20) and the rotation axis (L1) of the turntable (4).
